(19) Europäisches Patentamt
European Patent Office
Office européen des brevets

(11) Publication number: **0 321 223**
**A2**

(12) # EUROPEAN PATENT APPLICATION

(21) Application number: **88311845.7**

(22) Date of filing: **14.12.88**

(51) Int. Cl.[4]: **H 02 K 3/34**
H 02 K 15/12

(30) Priority: **14.12.87 JP 314053/87**
**29.02.88 JP 46314/88**

(43) Date of publication of application:
**21.06.89 Bulletin 89/25**

(84) Designated Contracting States: **DE FR GB**

(71) Applicant: **HITACHI, LTD.**
**6, Kanda Surugadai 4-chome Chiyoda-ku**
**Tokyo (JP)**

**Hitachi Chemical Co., Ltd.**
**1-1, Nishi-shinjuku 2-chome Shinjuku-ku**
**Tokyo 160 (JP)**

(72) Inventor: **Umeki, Satoru**
**23-14, Kanesawacho-6-chome**
**Hitachi-shi (JP)**

**Ebihara, Kouhei**
**2525-397, Mawatari**
**Katsuta-shi (JP)**

**Kamada, Naoki**
**12-15, Shiraume-3-chome**
**Mito-shi (JP)**

**Abe, Semuo**
**1-119, Bangai**
**Takucho Ushiku-shi (JP)**

**Watanabe, Yasuaki**
**1416-2, Tabiko**
**Katsuta-shi (JP)**

**Ono, Yoshimichi**
**2818-4, Sugaya Nakamachi**
**Naka-gun Ibaraki-ken (JP)**

**Tahara, Kazuo**
**32-13, Nishinarusawacho-2-chome**
**Hitachi-shi (JP)**

**Omori, Eiji**
**35-1, Takasuzucho-5-chome**
**Hitachi-shi (JP)**

**Ueta, Koki**
**818-3, Tabiko**
**Katsuta-shi (JP)**

**Shimizu, Susumu**
**1087, Kaneage**
**Katsuta-shi (JP)**

(74) Representative: **Molyneaux, Martyn William et al**
**c/o Ladas & Parry Isartorplatz 5**
**D-8000 Munich 2 (DE)**

(54) **Armature for small-sized rotary electrical machinery and method and apparatus for manufacturing same.**

(57) Resin coating layers (16, 17) are formed in slots (13) of an armature core (12) and on end faces (15) of the armature core by spraying powder insulating resin in the slots and then thermally liquidizing the resin or by introducing liquidized insulating resin into the slots. Thereafter, coils (18) are wound in the slots, and then the same or similar powder insulating resin (19) is filled in the slots and thereafter is thermally solidified. As the insulating resin, for example, resin including inorganic filler, such as tetra-glycizyl ether of tetra-phenol ethane, novolac phenol resin and the like.

FIG. 1

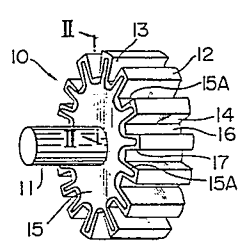


FIG. 3

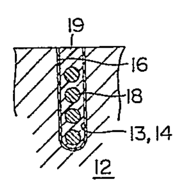


EP 0 321 223 A2

## Description

# ARMATURE FOR SMALL-SIZED ROTARY ELECTRICAL MACHINERY AND METHOD AND APPARATUS FOR MANUFACTURING SAME

## BACKGROUND OF THE INVENTION

The present invention relates to a rotor for a small-sized rotary electrical machinery, and more particularly, it relates to a rotor for a small-sized rotary electrical machinery wherein coils wound around a laminated core are fixed to the core by resin and the like, and to a method and an apparatus for manufacturing such rotor.

In general, an armature of a rotary electrical machine includes a rotor core having a plurality of slots formed therein, in each of which a coil is mounted. The coil mounted in each of the slots of the rotor core must be insulated from the corresponding slot by separating or spacing apart the coil from the inner surface of the corresponding slot. Conventionally, various methods for insulating the coils from the corresponding slots formed in the core have been proposed. For example, as disclosed in the Japanese Patent Laid-Open Publication No. 61-41346, insulation papers were provided in each of slots of the armature core, then the coil was wound in the corresponding slot, and thereafter, the coils were impregnated with varnish to fix the coils in the corresponding slots.

On the other hand, in a technique disclosed in the Japanese Patent Laid-Open Publication No. 54-163301, a powder resin layer was formed on the inner surface of each of the slots, then the coil was wound in the corresponding slot, and thereafter the coils were impregnated with varnish or the similar powder resin was added to the slots to fix the coils in the corresponding slots.

Further, as disclosed in the Japanese Patent Laid-Open Publication No. 59-110355, liquid resin was coated on the inner surface of each of the slots and insulation papers were mounted on edge portions of the end surfaces of the slots.

However, in operation of the rotary machine, the coils of the armature are subjected to centrifugal force, which force acts on a boundary surface between the solidified varnish and the insulation papers in each of the slots or between each of the resin layers and the armature core, thus tending to separate one from the other.

Such tendency is increased when the varnish and/or the resin layer are softened due to the heat of the armature core generated during the operation of the rotary machine.

In general, such varnish and/or insulation resin used in the conventional techniques, when exposed to the temperature of 400~450°C for about ten minutes, generates smoke, cracks, and/or swells, with the result that the insulation feature thereof is worsened and the mechanical strength thereof is reduced.

Consequently, there is a problem that, when the rotary machine is rotated at a speed of 5000 r.p.m. or more, the armature coils are slipped out from the corresponding slots and/or the insulation for the coils is destroyed.

In order to solve such problem, a specific insulation resin material as disclosed in the Japanese Patent Laid-Open Publication No. 51-11102 and/or a specific insulating method as disclosed in the Japanese Patent Laid-Open Publication No. 50-108505 has been used.

However, in such conventional techniques, it was difficult to saturate such insulation resin material in the slots of the armature core completely and closely, and such insulating method could not easily carried out.

## SUMMARY OF THE INVENTION

Accordingly, an object of the present invention is to provide a small-sized rotary electrical machine which there is no insulation failure between the coils and the coils are not slipped out from the corresponding slot of the armature core even when the rotary machine is rotated with large load at a high speed, and a method and an apparatus suitable to manufacture such small-sized rotary machine.

According to the present invention, the above-mentioned object is achieved by adhering heat resisting resin including inorganic filler onto the inner surfaces of the slots and onto the end faces of the armature core while rotating the armature core, before the coils are mounted or inserted into the corresponding slots, and then heating and solidifying the heat resisting resin while rotating the armature core, and thereafter, mounting the coils in the corresponding slots, then filling the same or similar heat resisting resin in the slots, and then heating and solidifying such resin.

The heat resisting resin to be adhered to sticked on the inner surfaces of the slots and on the end faces of the core is in a powder form at a room temperature, but, when used, is heated to be in a liquid form. And, the solidification of such resin is performed by heating the resin to a temperature more than that changing it in the liquid form.

The heat resisting resin to be adhered to the inner surfaces of the slots and the end faces of the core may be, for example, a powder mixture of epoxy resin and phenol resin, including inorganic filler such as alumina, silica, talc or the like.

In the construction of the armature of the small-sized rotary machine, coating layer comprising the solidified heat resisting resin including the inorganic filler is coated on the inner surface of each of the slots of the armature core and on at least edge portions of the slots at the end faces of the core, the coils are mounted or wound on the coating layer in the corresponding slots, and the same or similar heat resisting resin as the coating layer is filled in the slots around the coils and thermally solidified to form insulator.

Another object of the present invention is to provide an armature of a small-sized rotary machine comprising

a rotary shaft, a laminated core fixedly mounted on the rotary shaft, and coils inserted and fixed in corresponding coil receiving slots formed in an outer peripheral surface of the laminated core, wherein the coil receiving slots of the laminated core and at least a portion of coil end portions of the coils are filled or coated with resin compound including tetra-glycizyl ether of tetra phenol ethane, novolac phenol resin, and inorganic filler, and the resin compound is solidified.

Further, a further object of the present invention is to provide a method for manufacturing an armature of a small sized rotary electrical machine including a rotary shaft, a laminated core fixedly mounted on the rotary shaft and coils inserted and fixed in corresponding coil receiving slots formed in an outer peripheral surface of the laminated core, comprising the steps of mounting the coils in the corresponding coil receiving slots of the laminated core, then filling or coating the coil receiving slots of the laminated core and at least a portion of coil end portions of the coils with resin compound including tetra-glycizyl ether of tetra-phenol ethane, novolac phenol resin and inorganic filler, and thereafter, solidifying the resin compound under a temperature of 200° C or more.

The other object of the present invention is to provide an apparatus for manufacturing an armature of a small-sized rotary electrical machine including a rotary shaft, a laminated core fixedly mounted on the rotary shaft and coils inserted and fixed in corresponding coil receiving slots formed in an outer peripheral surface of the laminated core, comprising means for filling or coating the coil receiving slots of the laminated core and at least a portion of coil end portions of the coils with resin compound including tetra-glycizyl ether of tetraphenol ethane, novolac phenol resin and inorganic filler, and a thermosetting furnace for solidifying the resin compound under a temperature of 200° C or more.

According to the present invention, since the heat resisting resin including the inorganic filler is adhered or sticked to the inner surface of each of slots and the end faces of the armature core while rotating the armature core and the heat resisting resin is thermally solidified while rotating the armature core, the heat resisting resin can be coated not only on the inner surfaces of the slots, but also on the edge portions of the slots at the end faces of the armature core. Thus, the coating layers of the thermally solidified heat resisting resin are formed on the edge portions of each of the slots at the end faces of the core, thereby preventing insulation failure at the edge portions during a coil winding operation due to the existence of such coating layers. Further, since the coating layer is made of the same or similar material as the insulation resin filled in the slots afterwards, both resins can closely contact with each other and have the same thermal contraction feature, thus preventing separation them at the boundary therebetween. Consequently, even when the rotary machine is rotated at a high speed, the heat resisting resin is not separated (i.e., preventing ability of the resin for holding the coils in the corresponding slots from worsening) and thus, the insulation feature as to the coils is improved. Further, since both of the heat resisting resins are adhered and filled in their liquid form, the resin can be impregnated in the whole portion of each of the slots. further, since the coating layers are provided on the edge portions of the slots at the end faces of the core, it is no need to provide insulation papers thereon, thus increasing the effective volume of each of the slots for receiving the corresponding coil, with the result that the dimension of the whole core can be reduced.

Further, the resin compound including the tetra-glycizyl ether of tetra-phenol ethane, novolic phenol resin and inorganic filler is in the solid powder form at a room temperature, and is in the liquid form at a temperature of 100° C ~ 200° C, and is thermally solidified at a temperature more than 200° C. Further, this resin compound has a good heat resistance after it is solidified, and does not generate smoke, crack and swell, even when it is heated about 400° C ~ 450° C, thereby not worsening the insulation feature and/or mechanical strength thereof.

According to the present invention, by utilizing the above-mentioned feature of the resin compound, i.e., by filling or coating the coil receiving slots of the laminated core and at least a portion of the coil end portions of the coils with the resin compound including the tetra-glycizyl ether of tetra-phenol ethane, novolac phenol resin and inorganic filler, and by solidifying the resin compound, it is possible to obtain a rotor of a small-sized rotary machine which there is no insulation failure and the coils are not slipped out from the corresponding slot even when the motor is operated under the high temperature condition.

## BRIEF DESCRIPTION OF THE DRAWINGS

Fig. 1 is a perspective view of a rotor of a rotary electrical machine before it is completely constructed, according to a preferred embodiment of the present invention;

Fig. 2 is a sectional view taken along the line II-II of Fig. 1;

Fig. 3 is a cross-sectional view of one of slots formed in the rotor after it is completely constructed;

Figs. 4A and 4B are perspective views showing a step for filling liquidized heat resisting resin into the slot, and a step for thermally solidifying the heat resisting resin, respectively;

Fig. 5 is a perspective view showing a process for applying the liquidized heat resisting resin to the slots by means of immersion;

Fig. 6A is a perspective view of a rotor of a small-sized rotary electrical machine according to another embodiment of the present invention;

Fig. 6B is a cross-sectional view of a part of the rotor shown in Fig. 6A;

Figs. 7A, 7B and 7C are explanatory views for explaining a method for manufacturing a rotor according to the present invention;

Fig. 8 is a graph showing the relation between feature of insulation resin used to the rotor according to the present invention and a temperature;

Fig. 9 is a schematic elevational view of an apparatus for manufacturing the rotor of the small-sized rotary electrical machine according to the present invention;

Fig. 10 is a partial sectional view taken along the line X-X of Fig. 9.

DESCRIPTION OF THE PREFERRED EMBODIMENTS

An embodiment of the present invention will now be explained with reference to the accompanying drawings.

Figs. 1 and 2 show a rotor of rotary electrical machine before coils are mounted or inserted in corresponding slots formed in the rotor, and Fig. 3 shows a sectional view of one of the slots after the rotor is completed.

In Figs. 1 and 2, an armature 10 has a rotary shaft 11 and a laminated core 12 fixedly mounted on the rotary shaft 11 and the core 12 has a plurality of slots 13 formed therein. On an inner surface 14 of each of the slots and at least edge portions 15A of each slot at end faces 15 of the core, coating layers 16 and 17 each comprised of thermally solidified heat resisting resin including inorganic filler are coated. Thereafter, coils 18 are inserted, mounted or wound in each of the slots 13, and the same or similar heat resisting resin as the coating layer 16 is filled in each of the slots and thermally solidified to form an insulator 19, thus completing the armature. Here, "similar heat resisting resin" means that, while the heat resisting resin itself is the same as "same heat resisting resin", the rate of the inorganic filler involved therein is different from that in the "same heat resisting resin" or it differs from the "same heat resisting resin" in the point that it does not include the inorganic filler.

The armature 10 is manufactured in the following manner: that is, the heat resisting resin including the inorganic filler, which is in a powder form in a room temperature, is heated to a temperature to be changed to a liquid form, and the liquidized heat resisting resin is coated on an inner surface 14 of each of the slots 13 and on the end faces 15 of the armature core 12 while rotating the core. The thickness of the coated layer is preferably about 200 $\mu$, and method for coating the heat resisting resin may be dropping, immersing or spraying. When the liquidized heat resisting resin is coated by the dropping method, as shown in Fig. 4A, two dropping nozzles 20 are arranged at both end portions of the core 12. When the liquidized heat resisting resin is coated by the immersing method, as shown in Fig. 5, a lower portion of the core 12 is immersed in a liquidized resin 21. In order to further thicken the coating layer, viscosity of the resin may be increased by appropriately selecting composition and/or temperature of the resin, or the number of applications of the resin may be increased. Thereafter, as shown in Fig. 4B, the heat resisting resin is thermally solidified while rotating the core 12.

The heat resisting resin may be epoxy resin, unsaturated polyester resin, oil-denatured unsaturated polyester resin, alkyd resin, phenol denatured alkyd resin, phenol resin, oil-denatured phenol resin, vinyl holmal resin, epoxy ester resin, polybutadiene resin, urethane resin, polyimido resin, polyamide-imido resin and the like. Further, the inorganic filler can act to increase the heat resisting feature of the resin, as well as to harden the coating layer. The inorganic filler may be silica, alumina, talc and the like.

As an example, is taken compound obtained by adding inorganic filler to a mixture of epoxy resin and phenol resin. When it is heated to a temperature of the order of 100 ~ 150°C, it becomes in a liquid form. When the varnish comprising such liquidized compound is dropped onto the core 12 which is heated at substantially the same temperature while rotating the core at a speed of about 50 r.p.m., as shown in Fig. 4A, the varnish is adhered on the inner surface 14 and on the end faces 15 of the core, and, after the varnish has been dropped, when the varnish is heated to a temperature of about 200 ~ 250°C while rotating the core at the same speed of about 50 r.p.m., the varnish is solidified for about 30 minutes.

While the liquidized heat resisting resin is coated and solidified in this way, the resin applied to the end faces 15 of the core 12 tends to shift radially outwardly of the core due to centrifugal force, thus more thickening the coating layer at the edge portions 15A of the slots more than flat portions of the end faces 15 to gather the resin thereto. In this case, the relatively heavy inorganic filler included in the heat resisting resin is localized in the edge portions 15A due to the centrifugal force. Such localized material constitutes the coating layer 17 at the edge portions 15A after it is thermally solidified. Consequently, since the edge portions 15A (of each of the slots) about which the coil are bent during the coil mounting operation are reinforced by the thicknened coating layers 17, the insulation feature is improved, and damage of the insulator of the coils is prevented, thereby eliminating the insulation failure in the rotor.

After the coils are mounted or inserted in the corresponding slots of the core, the same or similar heat resisting resin as the coating layers 16 and 17 is impreganted or filled, in a liquid form, into the slots 13, and then is thermally solidified. In this way, the insulator 19 is formed. Since the insulator 19 and the coating layer 16 are constituted by the same or similar heat resisting resin, there is substantially no difference in thermal contraction feature at the high temperature between them, thus improving the insulation feature and holding feature of the resin.

According to the above-mentioned embodiment, since the heat resisting resin including the inorganic filler is adhered on the inner surface of each of the slots of the armature core and end faces of the core while rotating the core, and such heat resisting is thermally solidified while rotating the armature core, the coating layer comprising the solidified heat resisting resin is formed on the edge portions of the slots at the end faces of the core, by which the insulation failure at the edge portions during the winding operation of the coils into

the slots can be prevented. Further, since the coating layer comprises the same or similar heat resisting resin as that filled in the slots afterwards, there is substantially no difference in thermal contraction feature at the high temperature between them, thus preventing the insulation feature and holding feature of the resin from worsening. Further, since the same or similar heat resisting resin is used for forming the coating layers and for filling the slots, the manufacturing system can be simplified and the operation is facilitated. In addition, since the heat resisting resin is applied (adhered and filled) in the heated liquidized form, the slots can be completely filled with the resin. Further, since the coating layer is formed on each of the edge portions of the slots at the end faces of the core, it is no need to use insulation papers, the effective volume of the slots for receiving the corresponding coils is increased, thus reducing the dimension of the whole core and thus, reducing the dimension of the armature.

Next, another embodiment of the present invention will be explained.

Fig. 6A shows an armature 101 of a small-sized rotary electrical machine, for example, a starter motor of an automobile. As shown in Fig. 6A, the armature 101 has a rotary shaft 102 rotatably supported by a motor bracket (not shown). On the rotary shaft 102, an armature core 103 formed by a plurality of steel plates laminated to form a cylindrical configuration, and a commutator 104 are fixedly mounted. A plurality of coil receiving slots 105 are formed on an outer peripheral surface of the armature core 103, as shown in Fig. 6B. Coils 106 are inserted or mounted in the corresponding slots 105 after they are formed in a predetermined shape. Each of the coils 106 is constituted by an enameled wire, and is connected at its ends to the commutator 104 after it is mounted in the corresponding slot 105. Further, end portions of each coil 106 and the corresponding coil receiving slot 105 are coated and filled with insulating resin compound 107 (which will be fully explained later), respectively, and thereafter, the resin compound is solidified.

That is to say, according to the present invention, the insulating resin compound serves to both insulate the coils of the armature and fix the coils. Such insulating resin compound is formed by thermally liquidizing resin compound (which is in a solid or powder form at a room temperature) including (A) tetra-glycizyl ether of tetra-phenol ethane, (B) novolac phenol resin, and (C) inorganic filler, then coating the liquidized resin compound to the end portions of each coil and the slots of the armature 101, and thereafter, solidifying the resin compound at a temperature of 200° C or more. By forming the armature with such resin compound, since the resin compound does not crack and/or swell even if the resin compound is heated at a temperature of about 400° C ~ 450° C and has a good fixing feature at a high temperature, the resin compound can hold the coils in the corresponding slots even when the armature 101 is rotated at a high speed. Further, the resin compound can impregnate and permeate into the slots and the coil completely.

Next, each of components of the above-mentioned resin compound will be explained.

In the present invention, as the (A) component, i.e. tetra-glycizyl ether of tetra-phenol ethane, tetraglycizyl ether of tetra-phenol ethane represented by the following composition (1) is used:

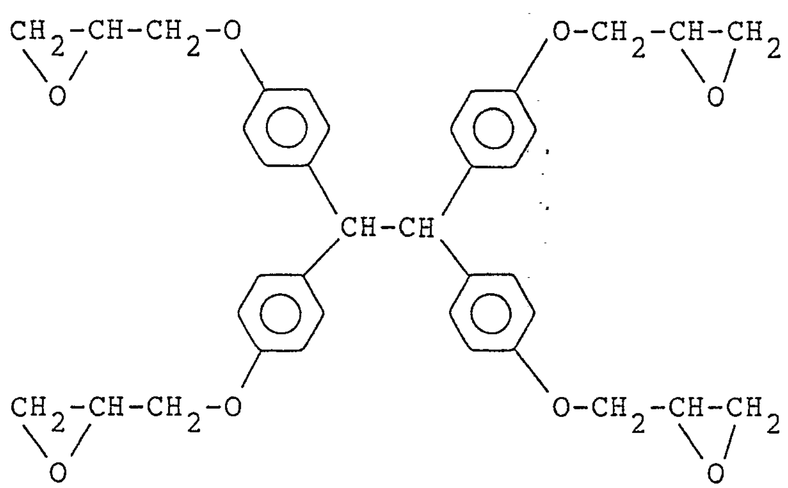

At need, a so-called epipis-type liquid epoxy resin (such as di-glycizyl ether derived from bisphenol A and epichlorohydrin and its inducer, and di-glycizyl ether derived from bisphenol F and epichlorohydrin and its inducer), alicyclic epoxy and its inducer (such as di-glycizyl ether derived from polyhydric alcohol and epichlorohydrin, glycizyl ether derived from polybasic acid and epichlorohydrin and its inducer, glycizyl ether derived from water-added bisphenol A and epochlorohydrin and its inducer, 3,4-epoxy-6-methylcyclohexylmethyl-3,4-epoxy-6-methylcyclohexanecarboxylate, di-cyclopentazienoxide, vinylcyclohexenoxide, bis(3,4-epoxycyclopentyl)ether, 3,4-epoxycyclohexylmethyl(3,4-epoxycyclohexane)carboxylate, bis(3,4-epoxy-6-methylcyclohexylmethyl)azipate, and limonene dioxide), methyl-substituted epoxy derived from isobutylene, and epoxy compound (such as diethyleneglycoldiglycycylether, phenylglycycylether, and butylglycizylether) may

be used in mixture with tetraglycizyl ether of tetra-phenol ethane.

As the novolac phenol resin of the (B) component, general novolac phenol resins and cresol novolac resin and the like can be used.

As the inorganic filler of the (C) component, aluminum oxide, powdered quartz, talc, mica, sodium silicate and the like can be used, and the inorganic filler having particles of diameter of 1 ~ 200 μm is preferable. It is preferable that 30 ~ 70 weight parts of the (B) component are used for 100 weight parts of the (A) component in consideration of adhesive force and heat resistance of the resin compound.

Further, it is preferable to use 50 ~ 400 weight parts of the (C) component with respect to 100 weight parts of the (A) component in consideration of viscosity and heat resistance of the resin compound.

The above-mentioned resin compound is in the powder form at a room temperature, as shown in Fig. 8. When the resin compound is applied to the coils on the rotor 101, the resin compound is thermally liquidized. In this case, it is desirable to liquidize the resin compound at a temperature of 100 ~ 200°C in consideration of work efficiency and pot file. Further, in order to thermally solidify the resin compound, it is necessary to heat the resin compound to a temperature of 200°C or more.

Next, the method for manufacturing the armature of the small-sized rotary electrical machine shown in Figs. 6A and 6B will be explained with reference to Figs. 7A, 7B and 7C.

First of all, in Fig. 7A, the resin compound 107 is in the powder form at a room temperature. The resin compound 107 is introduced into a fusing bath 110, and then is heated up to a temperature of 130°C by a heater 111, and is fused, mixed and agitated to be in the liquid form. As mentioned above, the resin compound is in the powder form at the room temperature, and is changed to the liquid form at a temperature of 100°C ~ 200°C, and can be returned to the powder form when it is cooled up to the room temperature. In addition, the resin compound is thermally solidified (thermoset) when it is heated up to a temperature of 200°C or more, and, after solidified, it cannot be returned to the liquid form or powder form even if it is cooled.

Fig. 7B shows a condition that the liquidized resin compound 107 fused or liquidized in the step shown in Fig. 7A is dropped onto a desired portions of a mold, such as end portions of the armature 101. More particularly, resin introducing nozzles 112 are connected to the fusing bath 111, and the liquidized resin compound is dropped onto the coil end portions on the armature, thereby molding the coil end portions with the resin compound. Further, in this condition, since the resin compound is in the liquid form, the resin compound dropped onto the core ends can fully penetrate into the coil receiving slots 105 formed in the outer peripheral surface of the laminated core 103 of the armature 101 and around the coils 106 situated in the slots, thus filling the coil receiving slots 105 of the armature 101 substantially completely, as shown in Fig. 6B. In this case, as mentioned above, the liquidized resin 107 is returned to the powder form when it is cooled below 100°C to make the flowing of the resin difficult. Thus, it is desirable to perform this step at the temperature of 100°C or more by using a heater 113.

In the illustrated embodiment, the resin compound 107 was liquidized before it was supplied to the coils and slots of the armature: however, it is possible that the armature core is heated at the temperature of 100 ~ 200°C and the powdered resin compound is supplied onto the heated core. Further, it is also possible that after the powdered resin compound is supplied onto the core it is heated to 100 ~ 200°C to liquidize it.

Next, the armature 101 molded with the resin compound is heated at the temperature of 200°C or more to thermally solidify the resin, as shown in Fig. 7C. More particularly, the armature with the resin compound is heated about 10 minutes in a heating furnace heated by a heater 114 at the temperature of 220°C, thermosetting the resin on the rotor core. It should be noted that when the heating temperature is lower than the above value (220°C), the treating time will be longer accordingly.

It has been found that, in the armature 101 so manufactured, even when it was heated more than 400°C, the thermoset resin did not crack or generate gas or smoke.

Particularly, when the armature is used for an armature of a starter motor for igniting an engine, since the large current flows through the coils of the armature even instantaneously in the starting operation, the armature 101 itself is heated up to about 400°C (and, particularly, in the small-sized motor, the armature is more heated). However, in the present invention, it has been found that insulation failure was not occurred because the coils on the armature were coated by the insulating resin compound. Further, although the starter motor is rotated at a high speed in the order of a few thousands r.p.m. in operation, it has been found that, in the armature of the motor according to the present invention, the coils were not slipped out from the corresponding slots due to the centrifugal force because the resin compound fixing the coils has a good mechanical resistance.

Fig. 9 shows an apparatus for manufacturing an armature of a small-sized rotary electrical machine according to the present invention, by which the above-mentioned manufacturing method is carried out. In Fig. 9, the apparatus for manufacturing the armature includes a heating furnace 200, a resin treatment chamber 201 positioned to the right side of the furnace 200, and a partition plate 202 and a partition curtain 203 positioned between the furnaces 200 and 201 for thermally separating both furnaces. Further, a belt conveyor 204 extends through the central portions of the heating furnace 200 and the resin treatment chamber 201, and a pair of rollers 205 for driving the conveyor 204 are positioned on the both ends of the conveyor. The heating furnace 200 is divided into two compartments by the belt conveyor 204, the upper compartment being constituted as a thermosetting furnace 206 and the lower compartment being constituted as a preheating furnace 207. more particularly, the thermosetting furnace 206 is maintained to a temperature of 200°C or more which is sufficient to thermally solidify the resin compound, by means of a heater 208 arranged in an upper

portion of the furnace 206 of the heating furnace 200. On the other hand, the lower preheating furnace 207 of the heating furnace 200 is maintained to a temperature of 100°C ~ 200°C which corresponds to the temperature for liquidizing the resin compound. Further, the resin treatment chamber 201 in which the resin is applied to the armature 101 is also maintained to the temperature which can liquidize the resin compound.

In addition, a fusing bath 300 is arranged above the resin treatment chamber 201 and is heated to a temperature (for example, 130°C) which can liquidize the resin compound, by means of a heater 301 arranged below the bath 300. The liquidized resin compound 302 situated in the bath 300 is introduced into a resin dropping nozzle 304 arranged in the upper portion of the resin treatment chamber 201 through a supply conduit 303 connected to the bottom of the bath 300, and then is dropped down onto the coil end portions and the like of the armature 101 passing therebeneath. Flow rate and dropped amount of the liquidized resin compound 302 directed to the nozzles 304 are controlled by a valve 305 positioned in the supply conduit 303. Further, in the resin treatment chamber 201, downstream of the nozzles 304, a sweeper or brush 306 is provided for removing the excessive resin from the armature. In addition, below the nozzles 304 and brush 306, a receiver tray 307 is provided for receiving the dropped resin (from the nozzles) and the removed resin (from the brush) and for sending the resin into a reservoir 308.

Further, a plurality of armature holder 209 are arranged on the belt conveyor 204 at equidistant intervals, each of which is adapted to fixedly hold the armature on the belt conveyor 204. In this way, as shown in Fig. 9, the armature 101 to be treated with the insulating resin are sequentially held on the rotor holders 209 on the belt conveyor 204 and is introduced into the heating furnace 200 through an opening formed on the left side of the furnace.

Fig. 10 shows a sectional view of the apparatus taken along the line X-X of Fig. 9. As shown in Fig. 10, a rotatable shaft 309 of the roller 205 for driving the conveyor 204 extends to protrude from the resin treatment chamber 201 and is provided at its free end with a gear 400 meshed with a gear 402 fixed to an output shaft of a drive motor 401. In this way, the rotational force from the drive motor 401 is transmitted to the roller 205 to turn the belt conveyor 204.

Further, as best seen in Fig. 10, each of the armature holders 209 attached to the belt conveyor 204 has a looped end into which the rotary shaft 102 of the armature 101 is inserted, whereby the armature 101 is rotatably held by the holder 209. In addition, when the armature 101 are fixedly held, sprockets 403 are attached to left ends of the corresponding rotary shafts 102 of the armatures, and a chain 404 is engaged by the sprockets 403. In chain 404 is turned through a sprocket 406 fixed to an output shaft of a chain drive motor 405. In this way, the armature 101 are shifted in the heating furnace 200 and treatment chamber while they are rotated.

Next, the operation of the above-mentioned apparatus will be fully explained. In Fig. 9, the belt conveyor 204 protrudes from the opening on the left side of the heating furnace 200. First of all, the rotary shaft 102 of the armature having the coils wound thereon is inserted into the looped end of the holder 209 attached to the belt conveyor 204. At the same time, the sprockets 403 (Fig. 10) are attached to the corresponding rotary shaft 102 of the armature 101 and the chain 404 is mounted around the sprockets 403. In this way, the armatures 101, while rotated on the belt conveyor 204, are at first introduced into the preheating furnace 207 of the heating furnace 200. In the preheating furnace 207, the armatures 101 are heated up to the temperature of 100°C ~ 200°C which corresponds to the temperature for liquidizing the resin compound, and then are introduced into the resin treatment chamber 201.

In the resin treatment chamber 201, the liquidized resin compound is dropped from the nozzles 304 onto the coil end portions of the coils wound on each of the armatures 101, whereby the resin compound is adhered to the coil end portions and is penetrated or filled between the coils inserted into the corresponding slots of the rotor core, thus molding the armature 101. In this case, as mentioned above, since each of the armatures 101 is shifted while rotated, the dropped resin compound is not localized on the armature, but is uniformly distributed on the armature, thus molding the armature uniformly. Thereafter, the excessive resin is removed from the molded armature (particularly, from the laminated core of the armature) by means of the sweeper or brush 306. Then, the armature is introduced into the thermosetting furnace 206, where the resin compound is thermally solidified or thermoset, thus completing the armature 101. The finished armature 101 is returned to the opening, where the armature is removed from the belt conveyor 204, and then is cooled.

In the above-mentioned manufacturing apparatus, the heating furnace 200 is divided into the upper thermosetting furnace 206 and the lower preheating furnace 207 by means of the belt conveyor 204 for conveying the armatures 101 through the furnace, and the each of the armatures is preheated to the temperature for liquidizing the resin compound in the lower preheating furnace 207 of the heating furnace 200 before the resin compound is coated on and filled in the armature. In this way, by preheating the armature before the resin is applied thereto, the resin compound is not re-solidified after adhered on the surface of the armature, whereby the resin can be impregnated around the coils and into the slots completely.

Further, when the outer surface of the armature is polished, it is desirable that the armature with the semi-solidified resin thereon is removed from the thermosetting furnace 206, because the completely thermoset resin compound is relatively hard, and thus, it is difficult to grind or scrape off the hardened resin on the armature by means of a tool and the like. Further, when the surface of the laminated core is scrapped off in order to adjust the rotational balance of the armature 101, similarly, it is desirable to remove the armature with the semi-hardened resin thereon from the thermosetting furnace 206.

Further, as shown in Fig. 9, the excessively dropped liquidized resin compound is gathered into the reservoir

308 through the receiver tray 307. As mentioned above, the resin compound is in the liquid form at the temperature of 100°C ~ 200°C, but is returned to the powder form when cooled by the room temperature (20°C). The gathered resin compound may be re-used by returning to the fusing bath 300 from the reservoir 308 as shown by an arrow in Fig. 9. To this end, by using the resin compound together with insulation molding material, it is possible to re-use the excessive resin compound, thereby minimizing the excessive use of the insulation material, thus permitting the inexpensive manufacture of the armature of the small-sized rotary electrical machine.

As apparent from the foregoing explanation, according to the embodiment of the present invention, there is provided an armature of a small-sized rotary electrical machine which does not generate smoke from the insulating resin and prevents the resin from cracking and/or swelling under the high temperature of 400°C ~ 450°C, thus not worsening the insulation feature and/or mechanical strength thereof, thereby withstanding against the large load and high speed rotation.

## Claims

1. An armature (10) of a small-sized rotary electrical machine constituted by adhering heat resisting resin (16, 17) including inorganic filler to inner surfaces (14) of slots (13) formed in an armature core 12) and to end faces (15) of said armature core while rotating said armature core, before coils (18) are embedded in said slits, by thermally solidifying said heat resisting resin while rotating said armature core, by winding the coils in said slots, by filling the same or similar heat resisting resin (19) in said slots, and by thermally solidifying said same or similar heat resisting resin.

2. An armature according to claim 1, wherein said heat resisting resin (16, 17) to be adhered to said inner surfaces of the slots and said end faces of the armature core is obtained by heating resin which is in powder form at a room temperature up to a temperature at which said resin is changed to liquid form, and said heat resisting resin (16, 17) is thermally solidified by heating said heat resisting resin to a higher temperature than said temperature at which said resin is changed to liquid form.

3. An armature according to claim 1, wherein said heat resisting resin (16, 17) to be adhered to said inner surfaces of the slots and said end faces of the armature core is obtained by heating a powder resin mixture of epoxy resin and phenol resin including at least one inorganic filler such as alumina, silica, and talc to change the resin mixture to the liquid form.

4. An armature (10) of a small-sized rotary electrical machine, wherein coating layers (16, 17) obtainable by thermally solidifying heat resisting resin including inorganic filler are provided on inner surfaces 14) of slots (13) of an armature core (12) and on at least edge portions (15A) of the slots at end faces (15) of said armature core, coils (18) are used on said coating layers (16) in said slots, and an insulator (19) obtainable by thermally solidifying the same or similar heat resisting resin (19) is filled around each of said coils in said slots.

5. A method for manufacturing an armature (10) of a small-sized rotary electrical machine, comprising the steps of:
adhering heat resisting resin (16, 17) including inorganic filler to inner surfaces (14) of slots (13) formed in an armature core (12) and to end faces (15) of said armature core while rotating said armature core, before coils (18) are embedded in said slots;
thermally solidifying said heat resisting resin while rotating said armature core;
winding said coils in said slots;
filling the same or similar heat resisting resin (19) in said slots; and,
thermally solidifying said same or similar heat resisting resin.

6. An armature (101) of a small-sized rotary electrical machine comprising a rotary shaft (11, 102), a laminated core (12, 103) fixedly mounted on said rotary shaft, and coils (18, 106) inserted and fixed in corresponding coil receiving slots (13, 105) formed in an outer peripheral surface of said laminated core, wherein said coil receiving slots of said laminated core and at least a portion of coil end portions of said coils are filled or coated with resin compound (16, 17) including tetra-glycizyl ether of tetra-phenol ethane, novolac phenol resin and inorganic filler, and said resin compound is solidified.

7. A method for manufacturing an armature (101) of a small-sized rotary electrical machine including a rotary shaft (11, 102), a laminated core (12, 103) fixedly mounted on said rotary shaft, and coils (18, 106) inserted and fixed in corresponding coil receiving slots (13, 105) formed in an outer peripheral surface of said laminated core, comprising the steps of:
after said coils are mounted in said corresponding coil receiving slots of said laminated core, filling or coating said coil receiving slots of said laminated core and at least a portion of coil end portions of said coils with resin compound (107, 302) including tetra-glycizyl ether of tetra phenol ethane, novolac phenol resin and inorganic filler; and
solidifying said resin compound under a temperature of 200°C or more.

8. A method according to claim 7, wherein said step of filling or coating is carried out under the condition that said resin compound is heated to 100°C ~ 200°C to liquidize said resin compound.

9. A method according to claim 8, wherein said step of filling or coating is carried out while rotating said rotor through said rotary shaft.

10. A method according to claim 8, wherein before said step of filling or coating, said rotor is preheated to a temperature of 100° C ~ 200° C.

11. An apparatus for manufacturing an armature (101) of a small-sized rotary electrical machine including a rotary shaft (11, 102) a laminated core (12, 103) fixedly mounted on said rotary shaft, and coils (18, 106) inserted and fixed in corresponding coil receiving slots (13, 105) formed in an outer peripheral surface of said laminated core, comprising:

means for filling or coating said coil receiving slots of said laminated core and at least a portion of coil end portions of said coils with resin compound (107, 302) including tetra-glycizyl ether of tetra-phenol ethane, novolac phenol resin and inorganic filler; and

a thermosetting furnace (206) for solidifying said resin compound under a temperature of 200° C or more.

12. An apparatus according to claim 11, wherein said filling of coating means comprising heating means (111, 301) for heating said resin compound at a temperature of 100° C ~ 200° C to liquidize said resin compound, and means (112, 304) for dropping the liquidized resin compound onto said armature.

13. An apparatus according to claim 12, wherein said filling or coating means further comprises rotating means (403, 404, 405, 406) for rotating said armatures through said rotary shafts.

14. An apparatus according to claim 12, wherein said filling or coating means further comprises means (306, 308) for gathering excessive resin compound adhered onto said armature and dropped through said armature.

15. An apparatus according to claim 12, further including a preheating furnace (207) for preheating said armature to a temperature of 100° C ~ 200° C before said filling or coating by means of said resin compound is carried out.

FIG. 1

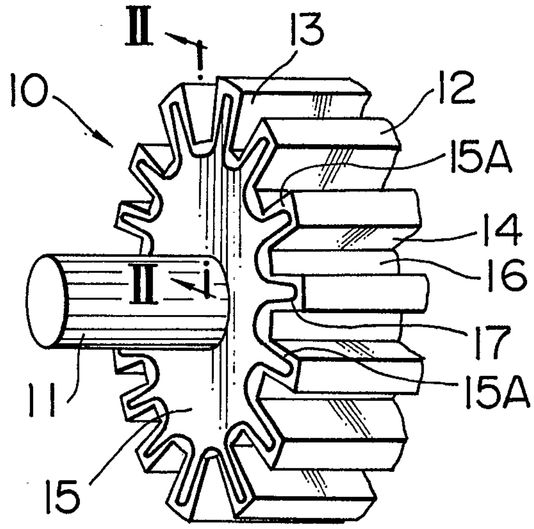


FIG. 2

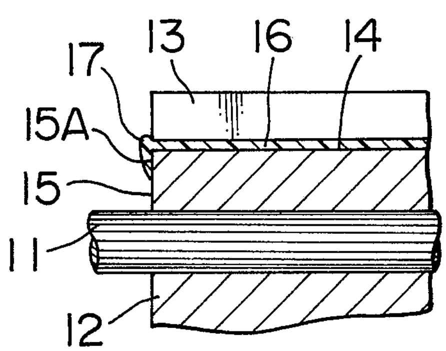


FIG. 3

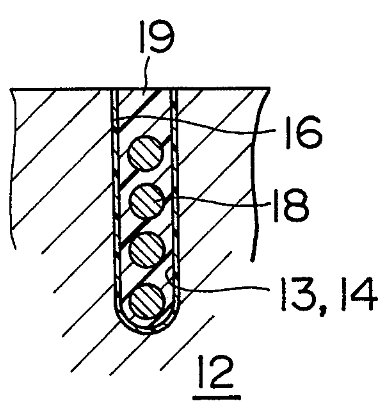

FIG. 4A

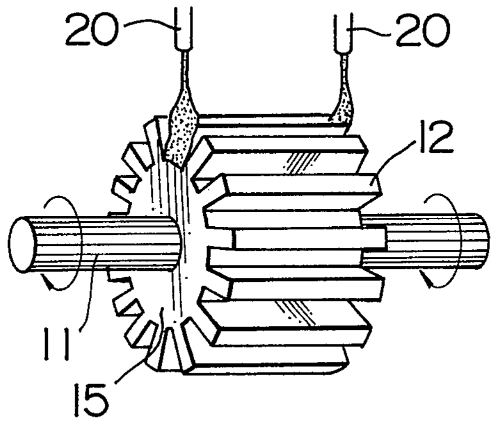


FIG. 4B

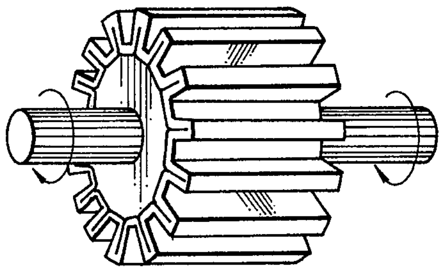

FIG. 5

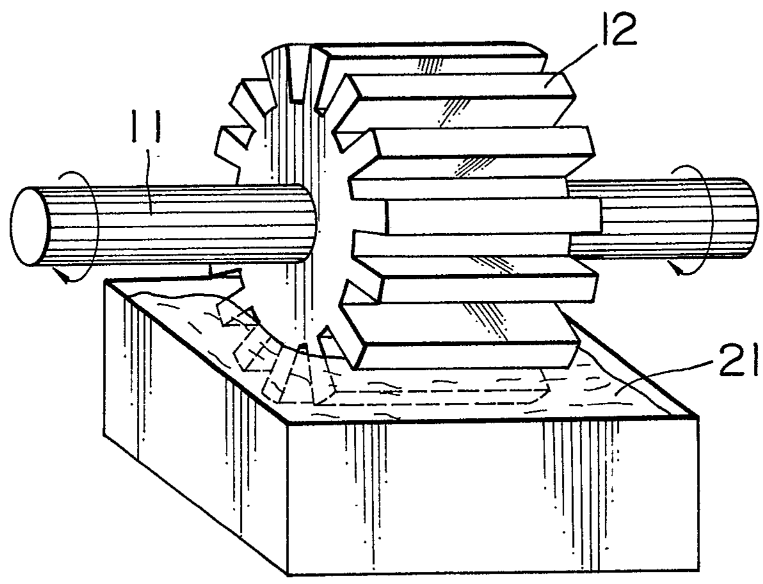

FIG. 6A

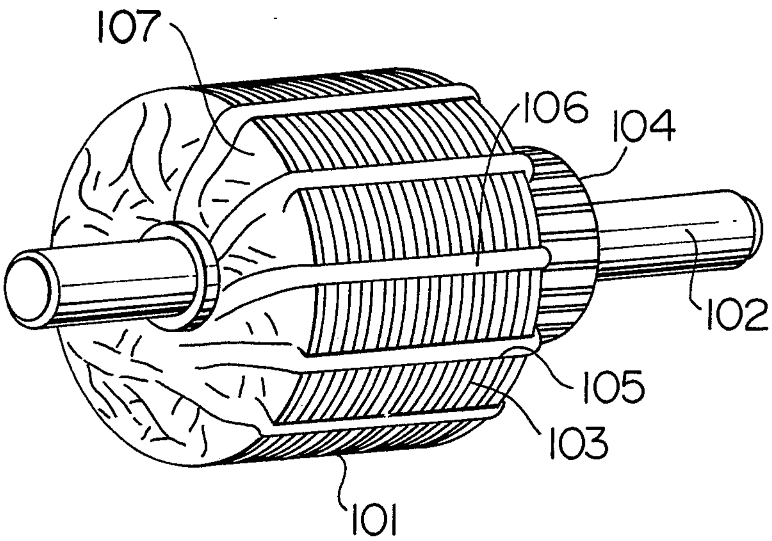


FIG. 6B

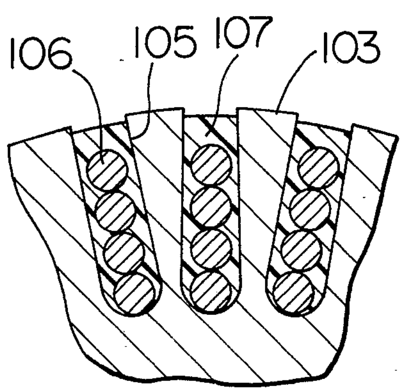

FIG. 7A

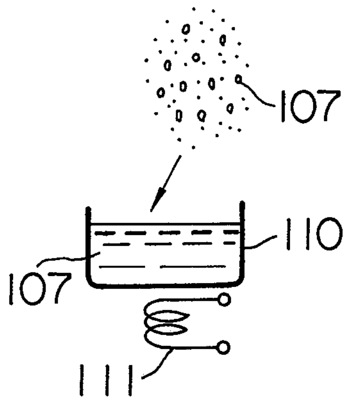


FIG. 7B

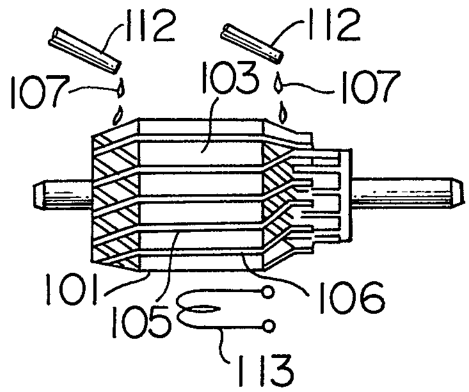


FIG. 7C

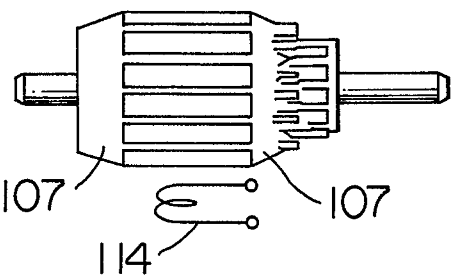


FIG. 8

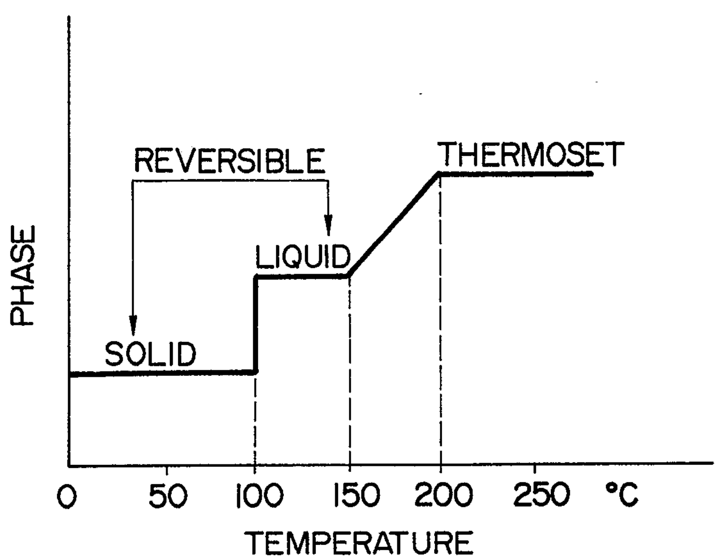

FIG. 9

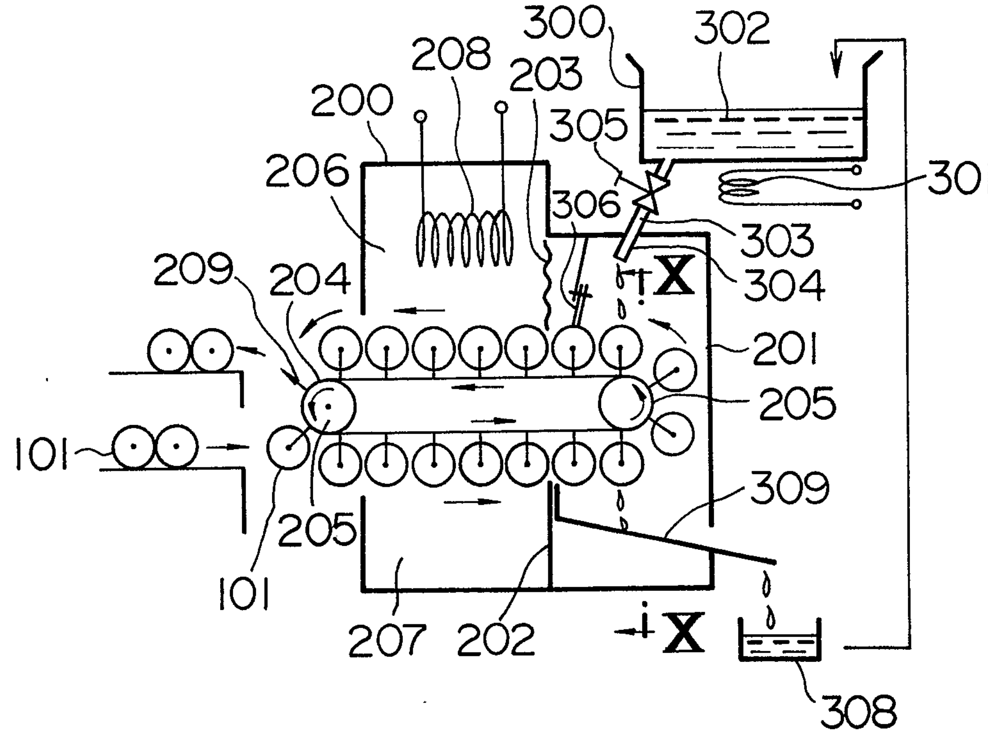
300
302
208
203
200
305
206
301
306
303
304
209
204
201
205
101
309
205
101
207
202
308

FIG. 10

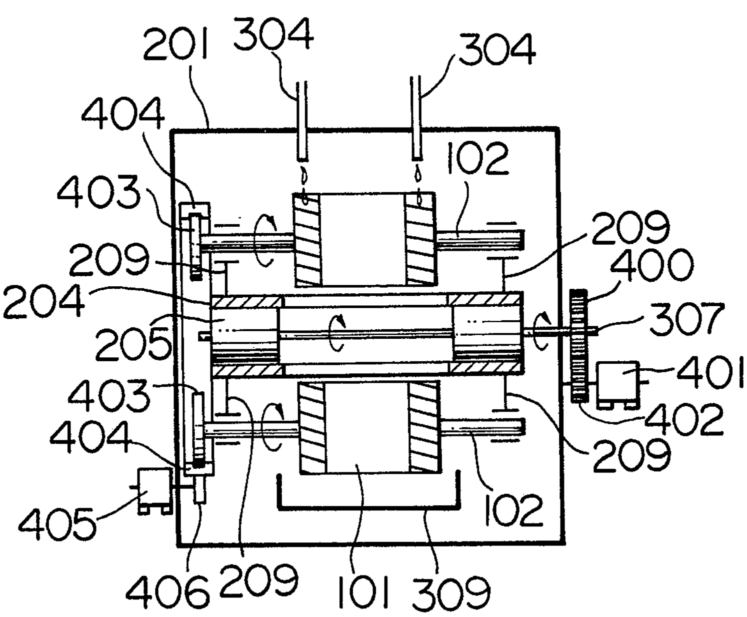
201
304
304
404
102
403
209
209
400
204
307
205
401
403
402
404
209
102
405
406
209
101
309